(19) Europäisches Patentamt
European Patent Office
Office européen des brevets

(11) **EP 2 182 189 B1**

(12) **EUROPEAN PATENT SPECIFICATION**

(45) Date of publication and mention
of the grant of the patent:
**19.09.2012 Bulletin 2012/38**

(51) Int Cl.:
*B01F 3/04* *(2006.01)*     *B01F 5/04* *(2006.01)*
*B01F 5/06* *(2006.01)*     *F01N 1/02* *(2006.01)*
*F01N 3/28* *(2006.01)*     *F01N 3/20* *(2006.01)*
*F01N 13/08* *(2010.01)*     *B01D 53/94* *(2006.01)*

(21) Application number: **08828023.5**

(22) Date of filing: **19.08.2008**

(86) International application number:
**PCT/JP2008/064720**

(87) International publication number:
**WO 2009/025262 (26.02.2009 Gazette 2009/09)**

(54) **EXHAUST SYSTEM FOR INTERNAL COMBUSTION ENGINE**

ABGASSYSTEM FÜR EINEN VERBRENNUNGSMOTOR

SYSTÈME D'ÉCHAPPEMENT POUR MOTEUR À COMBUSTION INTERNE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **21.08.2007 JP 2007214902**

(43) Date of publication of application:
**05.05.2010 Bulletin 2010/18**

(73) Proprietor: **Toyota Jidosha Kabushiki Kaisha
Toyota-shi, Aichi 471-8571 (JP)**

(72) Inventors:
• **BISAIJI, Yuki
Toyota-shi
Aichi 4718571 (JP)**
• **INOUE, Mikio
Toyota-shi
Aichi 4718571 (JP)**
• **FUKUDA, Koichiro
Toyota-shi
Aichi 4718571 (JP)**
• **NITTA, Satoru
Nishikamo-gun
Aichi 470-0224 (JP)**
• **NAGAE, Kiyohiko
Nishikamo-gun
Aichi 470-0224 (JP)**

(74) Representative: **Kuhnen & Wacker
Patent- und Rechtsanwaltsbüro
Prinz-Ludwig-Strasse 40A
85354 Freising (DE)**

(56) References cited:
**JP-A- 2005 240 602**    **JP-A- 2006 009 793**
**JP-A- 2006 077 576**    **JP-A- 2006 291 813**
**JP-A- 2007 016 613**    **JP-A- 2007 064 073**

## Description

TECHNICAL FIELD

The present invention relates to an exhaust system of an internal combustion engine.

BACKGROUND ART

An exhaust system of an internal combustion engine in which an extension chamber having a cross sectional area larger than the cross sectional area of an exhaust pipe is provided in the middle of the exhaust pipe upstream of an exhaust gas purification apparatus has been developed (see, for example, Patent Document 1 and 2).

Patent Document 5 shows a system for distributing content in a network. The system comprises a memory storing content. A provider network device communicates with the memory. A requester network device requests a copy of the content. The provider network device determines a local/remote status of the requester network device, and selectively transmits the copy of the content to the requester network device when the requester network device requests the content and has the local status.

Patent Document 1: JP 2006-207442 A
Patent Document 2: JP 2006-322327 A
Patent Document 3: JP 2005-290993 A
Patent Document 4: JP 2004-510909 A
Patent Document 5: JP 2006-77576 A

DISCLOSURE OF THE INVENTION

Problem to be Solved by the Invention

In the above-mentioned prior art technology, the axis of the extension chamber and the axis of the exhaust pipe are arranged on substantially the same line. In consequence, the exhaust gas flowing from the exhaust pipe into the extension chamber tends to be partially localized to a certain portion (i.e. a certain portion in a cross sectional plane perpendicular to the direction of the exhaust gas flow) rather than dispersed with respect to radial directions. Such localization of the distribution of the exhaust gas flow rate is considered to become remarkable during the time of high speed operations in which the inertial force of the exhaust gas is large.

If the above-described localization of the distribution of the exhaust gas flow rate occurs, since the most part of the exhaust gas concentrates to a portion of the exhaust gas purification apparatus, the purification capability of the exhaust gas purification apparatus cannot be made use of efficiently.

In particular, in the exhaust system in which a reducing agent needs to be supplied to the exhaust gas purification apparatus, the inertial force of the reducing agent is larger than the inertial force of the exhaust gas, and consequently the reducing agent tends to concentrate to a portion of the exhaust gas purification apparatus. If the reducing agent concentrates to a portion of the exhaust gas purification apparatus, the purification capability of the exhaust gas purification apparatus cannot be fully made use of, and the reducing agent may fail to be consumed usefully.

The present invention has been made in view of the above described situations and has an object to provide a technology with which the purification capability of the exhaust gas purification apparatus can be effectively made use of.

Means for Solving the Problem

To solve the above-described problem, according to the present invention, in an exhaust system of an internal combustion engine including an exhaust gas purification apparatus provided in an exhaust pipe of the internal combustion engine and a reducing agent supply apparatus that supplies a reducing agent to the exhaust gas before it flows into the exhaust gas purification apparatus, an extension chamber is provided downstream of the position at which the reducing agent supply apparatus supplies the reducing agent to the exhaust gas and upstream of the exhaust gas purification apparatus so that a plurality of flows are generated in the extension chamber.

Specifically, an exhaust system of an internal combustion engine according to claim 1 comprises:

an exhaust gas purification apparatus disposed in an exhaust pipe of the internal combustion engine;

an extension chamber provided in the middle of the exhaust pipe upstream of the exhaust gas purification apparatus, the extension chamber having an internal space with a cross sectional area larger than a cross sectional area of the passage of the exhaust pipe; and

a reducing agent supply apparatus that supplies a reducing agent to exhaust gas flowing into said extension chamber;

a back step flow creating portion that creates a back step flow of exhaust gas in the interior space of said extension chamber and a swirling flow creating portion that changes the flow of exhaust gas flowing into the interior space of said extension chamber into a swirling flow. The exhaust system is characterized in that said back step flow creating portion comprises an inlet port that brings the interior of the exhaust pipe located upstream of said extension chamber and the interior space of said extension chamber into communication with each other through a step, and said swirling flow creating portion comprises a guide wall surface that is oriented obliquely to the inflowing direction of the exhaust gas flowing into said extension chamber.

As the reducing agent supplied by the reducing agent supply apparatus and the exhaust gas flow into the interior space of the extension chamber, a back step flow is created. When the back step flow is created in the interior space of the extension chamber, the exhaust gas and the reducing agent flowing in the vicinity of the inner wall surface of the exhaust pipe are diffused and dispersed toward the periphery of the extension chamber. This leads to a decrease in the degree of convergence of the stream containing the exhaust gas and the reducing agent. The exhaust gas and the reducing agent flowing into the interior of the extension chamber tend to flow basically straightly along the inflowing direction by inertia, but their flow is changed into a swirling flow by the swirling flow creating portion. The change of the flow of the exhaust gas and the reducing agent into the swirling flow promotes the mixing of the exhaust gas and the reducing agent. In addition, when the back step flow and the swirling flow cross or meet each other, turbulence occurs in the interior space of the extension chamber. In consequence, partial localization of the distribution of the flow rate of the exhaust gas is eliminated, and the exhaust gas and the reducing agent are mixed uniformly. Consequently, the exhaust gas and the reducing agent are likely to extend uniformly in the entire of the exhaust gas purification apparatus.

In this case, since the cross sectional area of the channel of the exhaust gas increases abruptly by the step, the back step flow is created as the exhaust gas and the reducing agent pass through the step.

The swirling flow creating portion according to the present invention may be, for example, a guide wall surface that is oriented obliquely to the inflowing direction of the exhaust gas flowing into the extension chamber. The most part of the exhaust gas flowing from the exhaust pipe into the extension chamber (in particular, the exhaust gas flowing in the vicinity of the center axis of the exhaust pipe) travels substantially straightly in said inflowing direction and strikes the guide wall surface. Since the guide wall surface is oriented obliquely to said inflowing direction, the flow of the exhaust gas is then guided by the guide wall surface to change into a swirling flow.

The extension chamber according to the present invention may be disposed in such a way that the axis of the extension chamber is oriented obliquely to the inflowing direction of the exhaust gas flowing into the extension chamber. In this case, the inner wall surface of the extension chamber is oriented obliquely to the exhaust gas inflowing direction. In this case, the inner wall surface of the extension chamber can function as the aforementioned guide wall surface.

A projection or recess having a wall surface that is oriented obliquely to the inflowing direction of the exhaust gas flowing into the extension chamber may be provided on the inner wall surface of the extension chamber according to the present invention. In this case, the wall surface of the projection or recess can function as the aforementioned guide wall surface.

The aforementioned projection or recess may extend helically. In this case, the exhaust gas flowing into the extension chamber will swirl helically.

The inlet port of the extension chamber according to the present invention may be designed in such a way as to make the inner bottom surface of the exhaust pipe and the bottom surface of the interior space of the extension chamber continuous with each other without a step therebetween. In other words, the step of the inlet port may be provided only in the portion other than the portion by which the inner bottom surface of the exhaust pipe and the bottom surface of the interior space of the extension chamber are connected. Here, the bottom surface includes the surface that is located lowest when the exhaust gas purification system is mounted on a vehicle, and surfaces in the vicinity of this surface.

If a step is present between the inner bottom surface of the exhaust pipe and the bottom surface of the interior space of the extension chamber, liquid reducing agent that has not evaporated and condensed water may be stored on the step. In contrast, if the step is provided only in the portion other than the portion by which the inner bottom surface of the exhaust pipe and the bottom surface of the interior space of the extension chamber are connected, the above described problem can be prevented from occurring.

The distance along the direction of flow of the exhaust gas over which a back step flow(s) can be created is approximately equal to seven times the height of the step. Therefore, the distance from the upstream end of the interior space of the extension chamber to the downstream end thereof may be designed to be equal to or smaller than seven times the height of the step. In this case, back step flow(s) can be created in substantially the entire region in the interior space of the extension chamber from its upstream end to downstream end. Consequently, the diffusion of the exhaust gas and the reducing agent can be enhanced without an unduly large increase in the size of the extension chamber.

The extension chamber according to the present invention may be configured to have a hollow cylindrical shape. In this case, since the inner wall surface of the extension chamber is a curved surface, an increase in the pressure loss and an increase in the noise that will be caused when the exhaust gas strikes the inner wall surface of the extension chamber can be minimized. Furthermore, the extension chamber can be manufactured easily.

In the system according to the present invention, an outlet port that brings the interior space of the extension chamber into communication with the exhaust pipe disposed downstream of the extension chamber may be provided in such a way that the opening area of the outlet port is disposed at a position offset from the region defined by extending the opening area of the inlet port. This is because if at least a portion of the opening area of the outlet port overlaps the region defined by extending the opening area of the inlet port, a portion of the exhaust gas flowing into the extension chamber through the inlet port may travel straightly to the outlet port.

Advantageous Effect of the Invention

According to the present invention, the purification capability of an exhaust gas purification apparatus provided in an exhaust pipe of an internal combustion engine can be efficiently made use of.

BRIEF DESCRIPTION OF THE DRAWINGS

Fig. 1 is a side view showing the overall configuration of an exhaust system of an internal combustion engine according to a first embodiment.
Fig. 2 is a vertical cross sectional view showing the construction of the extension chamber according to the first embodiment.
Fig. 3 is a diagram showing flows of the exhaust gas in the extension chamber according to the first embodiment.
Fig. 4 is a diagram showing an undesirable construction of the extension chamber.
Fig. 5 is a diagram showing a desirable construction of the extension chamber.
Fig. 6 is a diagram showing an alternative construction of the extension chamber according to the first embodiment.
Fig. 7 is a horizontal cross sectional view showing the construction of the extension chamber according to a second embodiment.
Fig. 8 is a diagram showing flows of the exhaust gas in the extension chamber according to the second embodiment.
Fig. 9 is a horizontal cross sectional view showing an alternative construction (1) of the extension chamber according to the second embodiment.
Fig. 10 is a horizontal cross sectional view showing an alternative construction (2) of the extension chamber according to the second embodiment.
Fig. 11 is a vertical cross sectional view showing the construction of the extension chamber according to a third embodiment.
Fig. 12 is a vertical cross sectional view showing an alternative construction (1) of the extension chamber according to the third embodiment.
Fig. 13 is a vertical cross sectional view showing an alternative construction (2) of the extension chamber according to the third embodiment.
Fig. 14 is a vertical cross sectional view showing the construction of the extension chamber according to a fourth embodiment.
Fig. 15 is a vertical cross sectional view showing an alternative construction of the extension chamber according to the fourth embodiment.
Fig. 16 is a vertical cross sectional view showing the construction of the extension chamber according to a fifth embodiment.
Fig. 17 is a diagram showing an arrangement of a resonator.
Fig. 18 is a diagram showing another arrangement of a resonator.
Fig. 19 is a vertical cross sectional view showing the construction of the extension chamber according to a sixth embodiment.
Fig. 20 is a vertical cross sectional view showing an alternative construction of the extension chamber according to the sixth embodiment.
Fig. 21 is a perspective view showing the arrangement of the extension chamber and the exhaust pipes according to the seventh embodiment.
Fig. 22 is a vertical cross sectional view showing the construction of the extension chamber according to the seventh embodiment.
Fig. 23 is a diagram showing flows of the exhaust gas in the extension chamber according to the seventh embodiment.
Fig. 24 is a horizontal cross sectional view showing an alternative construction of the extension chamber according to the seventh embodiment.
Fig. 25 is a diagram showing another embodiment (1) of the extension chamber.
Fig. 26 is a diagram showing another embodiment (2) of the extension chamber.

DESCRIPTION OF THE REFERENCE SIGNS

1: internal combustion engine
2: upstream exhaust pipe
3: extension chamber
4: downstream exhaust pipe
5: exhaust gas purification apparatus
6: reducing agent addition valve (reducing agent supply apparatus)
30: cylindrical member
31: inner circumferential wall surface (swirling flow creating portion)
32: upstream end wall
33: inlet port (back step flow creating portion)
34: downstream end wall
35: outlet port
36: projection
37: projecting pipe
38: projecting pipe
39: annular projection
40: stepped portion
41: ridge portion
42: resonator
43: communication hole
44: bottom surface
50: inner wall surface
51: inlet port

60: extension chamber
61: cylindrical member

THE BEST MODE FOR CARRYING OUT THE INVENTION

In the following, specific embodiments of the present invention will be described with reference to the drawings.

<Embodiment 1>

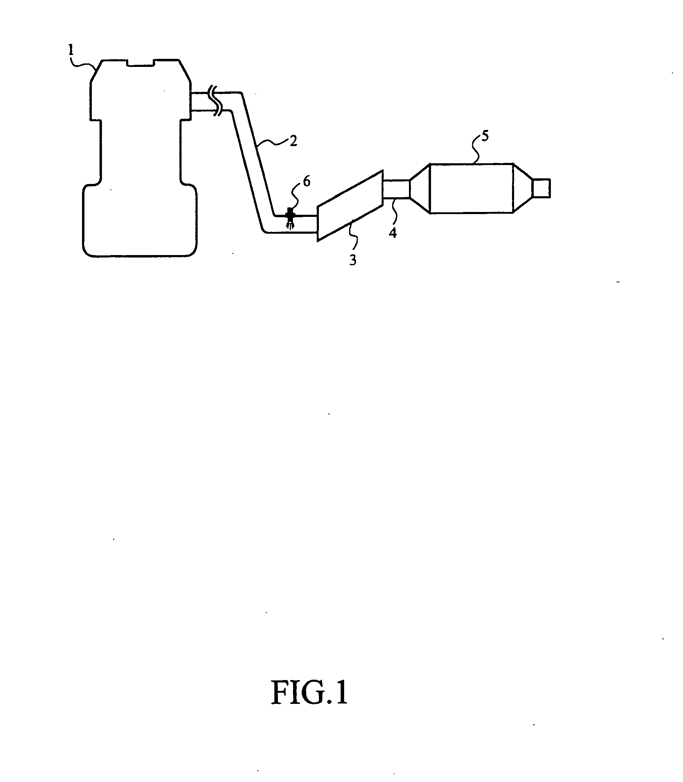

A first embodiment of the present invention will be firstly described with reference to Figs. 1 to 6. Fig. 1 is a diagram showing the overall configuration of an exhaust system of an internal combustion engine according to the present invention.

In Fig. 1, an exhaust pipe 2 is connected to an internal combustion engine 1. The exhaust pipe 2 is connected to an extension chamber 3. The extension chamber 3 is in communication with an exhaust gas purification apparatus 5 via an exhaust pipe 4. In the following, the exhaust pipe 2 will be referred to as the upstream exhaust pipe 2, and the exhaust pipe 4 will be referred to as the downstream exhaust pipe 4.

The aforementioned exhaust gas purification apparatus 5 has any one of a configuration in which an NOx storage reduction catalyst is housed in a casing, a configuration in which an NOx storage reduction catalyst and a particulate filter are housed in a casing, and a configuration in which an oxidation catalyst and a particulate filter are housed in a casing.

A reducing agent addition valve 6 that supplies a reducing agent to the exhaust gas flowing in the upstream exhaust pipe 2 is attached to the upstream exhaust pipe 2. The reducing agent addition valve 6 is an embodiment of the reducing agent supply apparatus according to the present invention.

The reducing agent addition valve 6 adds a reducing agent such as fuel or urea to the exhaust gas when NOx stored in the exhaust gas purification apparatus 5 is to be removed by reduction, when SOx stored in the exhaust gas purification catalyst 5 is to be removed by reduction, or when PM trapped in the exhaust gas purification apparatus 5 is to be removed by oxidation.

The distribution of the flow rate of the exhaust gas and the reducing agent tends to be partially localized to a portion in a cross section perpendicular to the direction of flow of the exhaust gas. For example, the distribution of the flow rate of the exhaust gas tends to concentrate to a central portion of the aforementioned cross section. On the other hand, the reducing agent tends to flow on the inner bottom surface of the exhaust pipe. If the distribution of the flow rate of the exhaust gas and the distribution of the flow rate of the reducing agent are partially localized to a portion, there arises a situation in which the distribution of the flow rate of the exhaust gas concentrate to a central portion of the exhaust gas purification apparatus and the distribution of the flow rate of the reducing agent concentrate to the bottom portion of the exhaust gas purification apparatus.

A conceivable method of preventing this situation from occurring would be to provide a dispersing plate in the flow channel upstream of the exhaust gas purification apparatus so as to uniformly mix the exhaust gas and the reducing agent and to eliminate partial localization of the distribution of the flow rate of the exhaust gas and the reducing agent. However, since the dispersing plate provides a resistance against the flow of the exhaust gas and the reducing agent, it may cause a rise in the back pressure.

An alternative conceivable method would be to provide the exhaust pipe with an extension chamber with an interior space having a cross sectional area larger than the cross sectional area of the passage in the exhaust pipe, at a certain position upstream of the exhaust gas purification apparatus. However, in the case where the axis of the exhaust pipe and the axis of the extension chamber are aligned on the same line, the partial localization of the distribution of the flow rate of the exhaust gas may fail to be eliminated when the inertial force of the exhaust gas is large, as is the case when the internal combustion engine is operating at high speed. This problem may be solved by increasing the length and/or cross sectional area of the extension chamber, but this solution will lead to a deterioration in the in-vehicle mountability.

In view of the above, the exhaust system of an internal combustion engine according to this embodiment is designed in such a way that back step flow and a swirling flow of the exhaust gas are generated in the interior of the extension chamber 3. By this feature, the uniform mixing of the exhaust gas and the reducing agent can be facilitated, and the partial localization of the distribution of the flow rate can be eliminated without an increase in the size of the extension chamber 3.

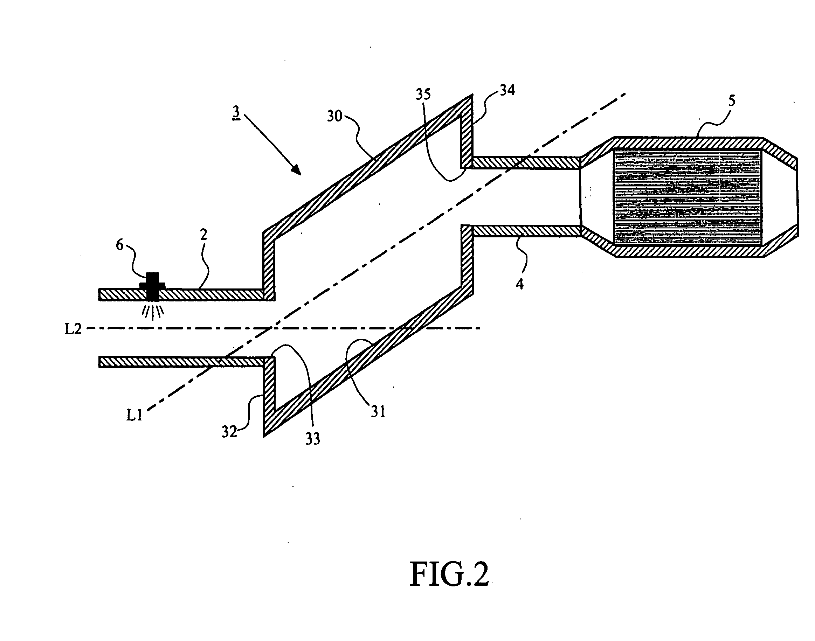

Fig. 2 is a vertical cross sectional view showing the construction of the extension chamber 3. The extension chamber 3 shown in Fig. 2 is composed of a hollow cylindrical member 30 having an inner diameter larger than the inner diameter of the upstream exhaust pipe 2. The cylindrical member 30 is disposed in such a way that virtual line L1 drawn by extending the axis of the cylindrical member 30 and the direction of flow of the exhaust gas flowing into the cylindrical member 30 (that is, in this case, virtual line L2 drawn by extending the axis of the upstream exhaust pipe 2) cross each other obliquely. In other words, the aforementioned cylindrical member 30 is disposed in such a way that the virtual line L2 drawn by extending the axis of the upstream exhaust pipe 2 intersects the inner circumferential wall surface 31 of the cylindrical member 30 obliquely.

On one end wall 32 of the aforementioned cylindrical member 30 is provided an inlet port 33 that allows the exhaust gas to flow from the upstream exhaust pipe 2 into the interior of the cylindrical member 30. On the other end wall 34 of the aforementioned cylindrical member 30 is provided an outlet port 35 that allows the exhaust gas to flow from the interior of the cylindrical member 30 into the downstream exhaust pipe 4. In the following, the end wall 32 on which the inlet port 33 is provided will be referred to as the upstream end wall 32, and the end wall 34 on which the outlet port 35 is provided will be referred to as the downstream end wall 34.

The inlet port 33 has a step by which an inner diameter equal to that of the upstream exhaust pipe 2 is stepped up substantially vertically to an inner diameter equal to that of the extension chamber 3. This step corresponds to the back step flow creating portion according to the present invention.

The outlet port 35 is connected with the downstream exhaust pipe 4. The outlet port 35 has a step by which an inner diameter equal to that of the extension chamber 3 is stepped down substantially vertically to an inner diameter equal to that of the downstream exhaust pipe 4.

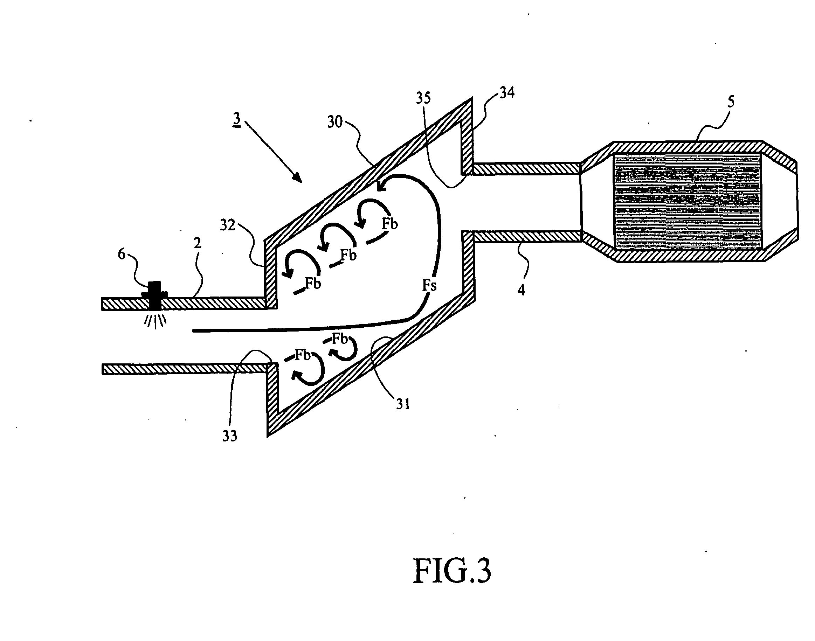

With the exhaust system of an internal combustion engine having the above-described construction, as the reducing agent added through the reducing agent addition valve 6 and the exhaust gas flow from the upstream exhaust pipe 2 into the extension chamber 3 through the inlet port 33, there are created back step flows Fb by which the exhaust gas and the reducing agent flowing in the vicinity of the inner wall surface of the upstream exhaust pipe 2 are diffused and dispersed in radial directions after passing through the step of the inlet port 33 as shown in Fig. 3. The degree of convergence of the stream containing the exhaust gas and the reducing agent is decreased by the back step flows Fb.

The exhaust gas and the reducing agent having been flowing in the vicinity of the center axis of the upstream exhaust pipe 2 strike the inner wall surface 31 of the extension chamber 3 obliquely to create a swirling flow Fs that swirls upward. The swirling flow Fs promotes the uniform mixing of the exhaust gas and the reducing agent. In particular, the reducing agent flowing in the bottom portion in the upstream exhaust pipe 2 is diffused and dispersed as it is brought upward by the aforementioned swirling flow Fs.

Furthermore, as the aforementioned swirling flow and the aforementioned back step flows cross or meat each other, turbulence occurs in the extension chamber 3. The turbulence further promotes the uniform mixing of the reducing agent and the exhaust gas, and eliminates the partial localization of the distribution of the flow rate of the exhaust gas and the reducing agent.

In consequence, the gas flowing out of the outlet port 35 of the extension chamber 3 into the downstream exhaust pipe 4 contains the exhaust gas and the reducing agent that are mixed uniformly, and a stream free from the partial localization of the distribution of the flow rate is created. Therefore, the exhaust gas and the reducing agent will extend uniformly in the entire of the exhaust gas purification apparatus 5. Consequently, the purification capability of the exhaust gas purification apparatus 5 can be efficiently made use of.

According to the exhaust system of an internal combustion engine of this embodiment, since it is not necessary to make the size of the extension chamber 3 unduly large, a deterioration in the in-vehicle mountability can be prevented. Furthermore, according to the exhaust system of an internal combustion engine of this embodiment, the pressure loss across the extension chamber 3 will not become unduly large.

Effective back step flow and swirling flow may fail to be created only by arranging the cylindrical member 30 constituting the extension chamber 3 obliquely with respect to the upstream exhaust pipe 2.

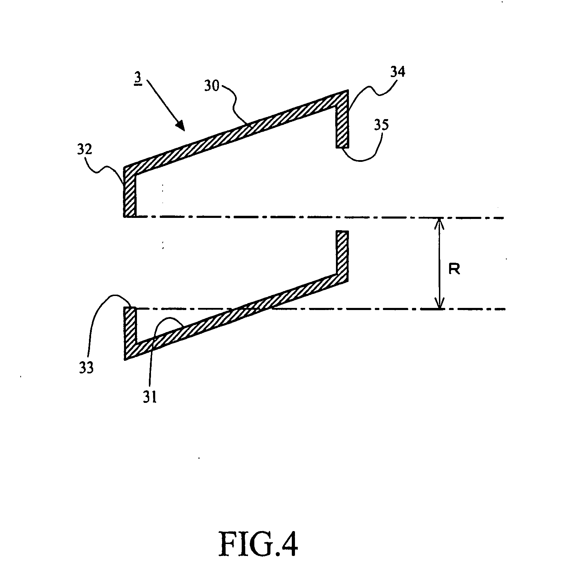

For example, as shown in Fig. 4, if at least a part of the opening area of the outlet port 35 overlaps the region R defined by extending the opening area of the inlet port 33 along the axial direction, or if the downstream end wall 34 is included in the aforementioned region R, the exhaust gas flowing into the cylindrical member 30 through the inlet port 33 may travel straightly to the outlet port 35, or the exhaust gas flowing into the cylindrical member 30 through the inlet port 33 may strike the downstream end wall 34 substantially vertically to cause an increase in the pressure loss.

Therefore, it is preferred that the region R defined by extending the opening area of the inlet port 33 include only the inner circumferential wall surface 31 of the cylindrical member 30. To meet this condition, the extension chamber 3 may be designed in such a way as to satisfy the following formula (1):

$$\alpha \geq \sin^{-1}(C + D)/A \quad (1).$$

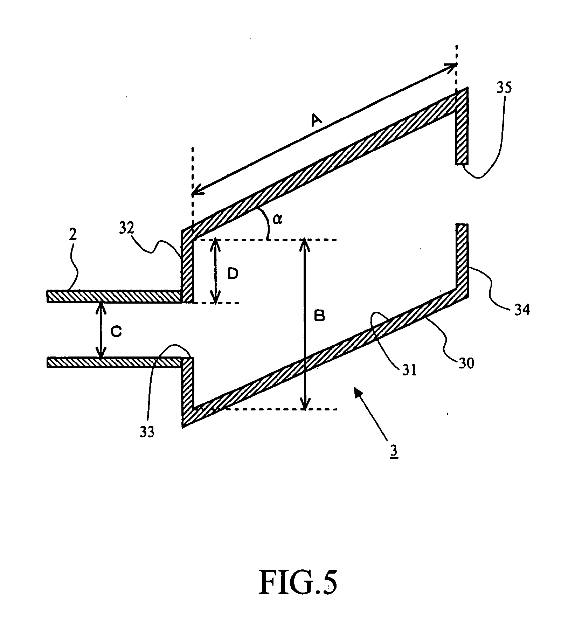

In formula (1) presented above, A is the length of the interior space of the cylindrical member 30 along the axial direction, C is the inner diameter of the upstream exhaust pipe 2 (i.e. the diameter of the opening area of the inlet port 33), D is the height of the step of the inlet port 33, and $\alpha$ is the inclination angle of the cylindrical member 30 with respect to the upstream exhaust pipe 2 (i.e. the angle of intersection of the aforementioned virtual lines L1 and L2) (see Fig. 5).

With the above-described design of the extension chamber 3, the quantity of the exhaust gas traveling straightly from the inlet port 33 to the outlet port 35 can be made as small as possible. In other words, substantially the entire portion of the exhaust gas flowing through the inlet port 33 into the cylindrical member 30 strikes the inner circumferential wall surface 31 obliquely to create the swirling flow.

The distance along the axial direction of the cylindrical member 30 over which back step flows can be created is approximately equal to seven times the height D of the step. Therefore, the length A of the interior of the cylindrical member 30 along the axial direction may be designed to be equal to or smaller than seven times the height D of the step (A ≤ 7D).

In this case, the back step flows can be created in substantially the entire region inside the cylindrical member 30 from its upstream end to downstream end. Consequently, the diffusion of the exhaust gas and the reducing agent can be enhanced without an unnecessary increase in the size of the extension chamber 3.

Furthermore, the inventors of the present invention have found that the maximum distance that the back step flows can reach with respect to the vertical direction is approximately equal to three times the inner diameter C of the upstream exhaust pipe 2. Therefore, if the inner diameter B of the cylindrical member 30 is designed to be larger than three times the inner diameter C of the upstream exhaust pipe 2, a pressure loss may occur. On the other hand, if the inner diameter B of the cylindrical member 30 is designed to be excessively small, the back step flows may merge into the mainstream of the exhaust gas (i.e. the stream traveling along the axis of the upstream exhaust pipe 2) to disappear. Therefore, the inner diameter of the cylindrical member 30 may be designed in such a way that the following formula (2) be satisfied:

$$3C \geq B \geq 1.2C \quad (2).$$

If the inner diameter of the cylindrical member 30 is designed as above, an unnecessary increase in the size of the extension chamber 3, an increase in the pressure loss, and the disappearance of the back step flows can be prevented.

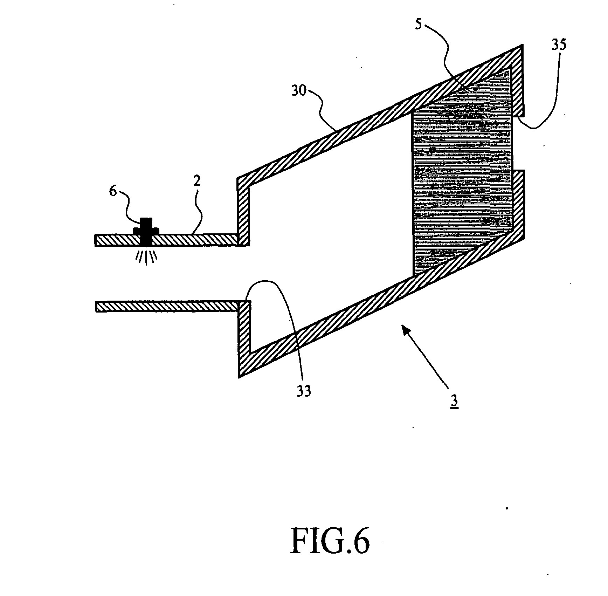

Since a large distance from the outlet port 35 of the extension chamber 3 to the exhaust gas purification apparatus 5 may cause partial localization of the distribution of the exhaust gas flow rate again, it is preferred that the distance between the outlet port 35 of the extension chamber 3 and the exhaust gas purification apparatus 5 be made as small as possible. In view of this, the exhaust gas purification apparatus 5 may be provided in the neighborhood of the outlet port 35 in the interior of the cylindrical member 30 as shown in Fig. 6.

<Embodiment 2>

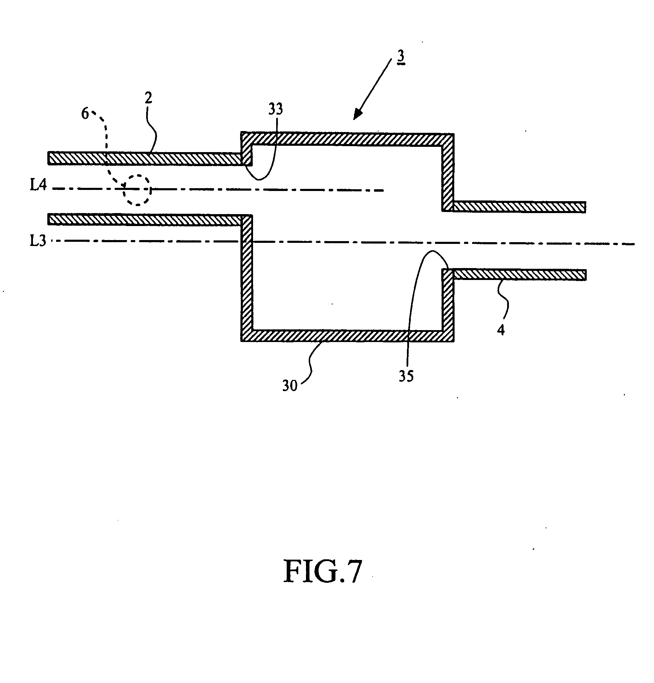

A second embodiment of the present invention will be described with reference to Figs. 7 to 9. Here, the features that are different from those in the first embodiment will be described, and a description of like features will be omitted.

Fig. 7 is a horizontal cross sectional view showing the construction of the extension chamber 3 in this embodiment. In Fig. 7, the inlet port 33 of the extension chamber 3 is arranged in such a way that the axis L4 of the inlet port 33 is offset from the axis L3 of the cylindrical member 30 with respect to the horizontal direction. The features other than this are the same as those in the first embodiment.

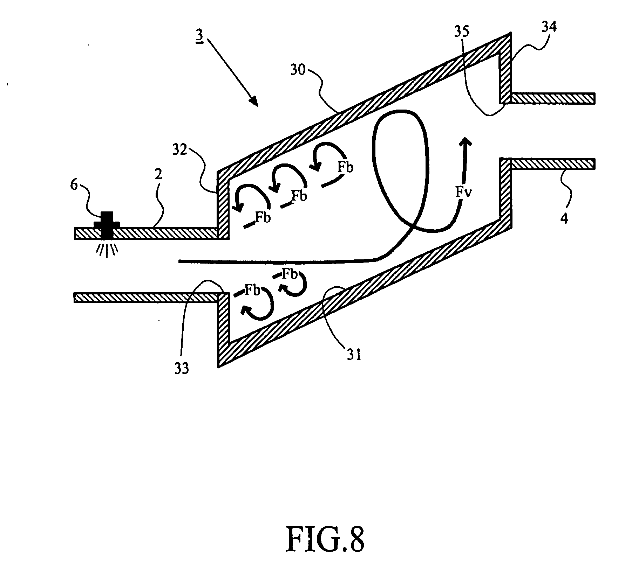

With the extension chamber 3 having the above-described construction, the exhaust gas flowing from the upstream exhaust pipe 2 into the cylindrical member 30 through the inlet port 33 strikes the inner circumferential wall surface 31 of the cylindrical member 30, and consequently a swirling flow Fv that helically swirls around the axis of the cylindrical member 30 is created as shown in Fig. 8.

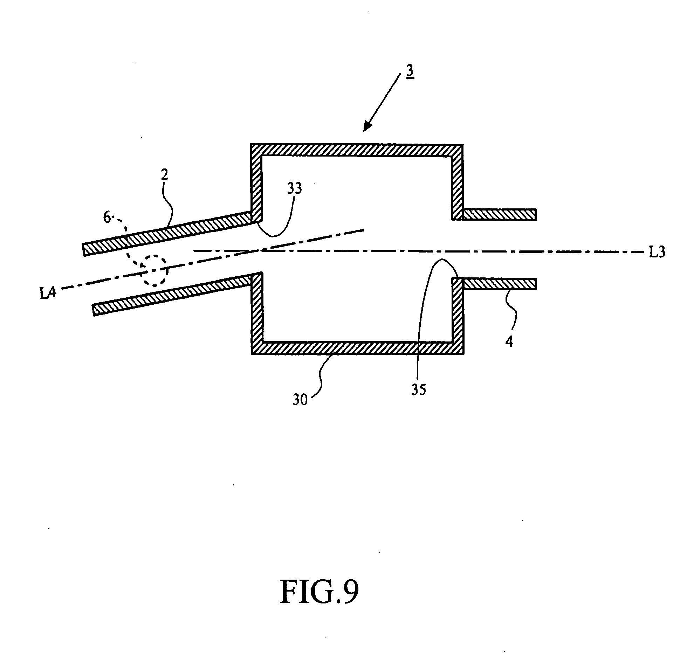

The same effect can also be achieved by making the inflowing angle of the exhaust gas flowing from the upstream exhaust pipe 2 into the cylindrical member 30 skew as shown in Fig. 9. Specifically, the effect similar to that of the construction shown in Fig. 7 can be achieved by arranging the inlet port 33 in such a way that the axis L4 of the upstream exhaust pipe 2 intersects obliquely with the axis L3 of the cylindrical member 30 with respect to the horizontal direction.

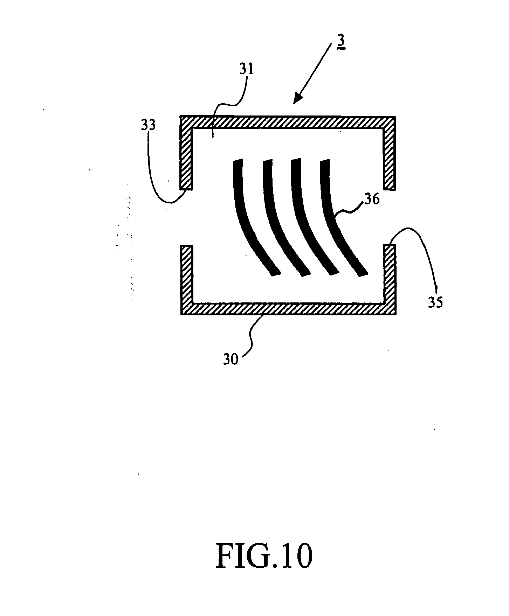

Alternatively, the effect similar to that of the construction shown in Fig. 7 may be achieved by providing projections (or grooves) 36 that extend helically on the inner circumferential wall surface 31 of the cylindrical member 30, as shown in Fig. 10.

<Embodiment 3>

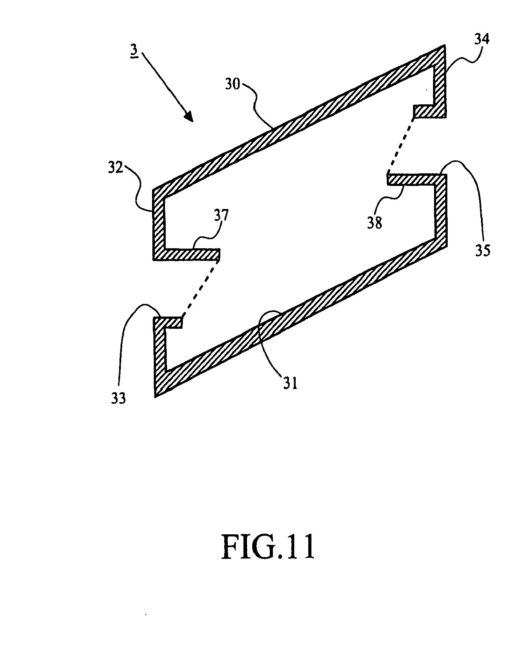

A third embodiment of the present invention will be described with reference to Figs. 11 to 13. Here, the features that are different from those in the first embodiment will be described, and a description of like features will be omitted.

Fig. 11 is a vertical cross sectional view showing the construction of the extension chamber 3 in this embodiment. In Fig. 11, the inlet port 33 has a cylindrical projecting pipe 37 that projects into the interior of the cylindrical member 30. The inner diameter of the projecting pipe 37 is equal to the inner diameter of the upstream exhaust pipe 2. The length of projection of the projecting pipe 37 is larger in its upper portion than in its lower portion.

The outlet port 35 has a cylindrical projecting pipe 37 that projects into the interior of the cylindrical member 30. The inner diameter of the projecting pipe 38 is equal to the inner diameter of the downstream exhaust pipe 4. The length of projection of the projecting pipe 38 is larger in its lower portion than in its upper portion.

With the extension chamber 3 having the above-described construction, a swirling flow can be created more reliably because the projecting pipes 37, 38 hinder the exhaust gas from flowing straightly from the inlet port 33 to the outlet port 35.

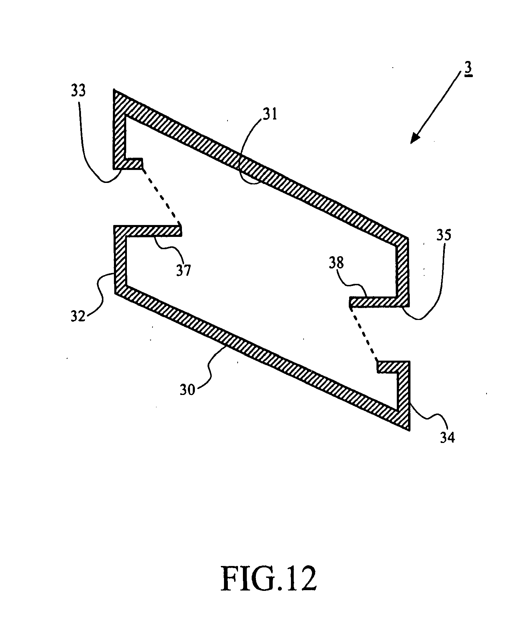

In this embodiment, a case in which the inlet port 33 is arranged at a position lower than the outlet port 35 (in other words, a case in which the upstream end wall 32 of the cylindrical member 30 is arranged to be lower than the downstream end wall 34) has been described by way of example. In the case where the inlet port 33 is arranged at a position higher than the outlet port 35 (see Fig. 12), the length of projection in the lower portion of the projecting pipe 37 should be larger than the length of projection in its upper portion, and the length of projection in the lower portion of the projecting pipe 38 should be smaller than the length of projection in its upper portion.

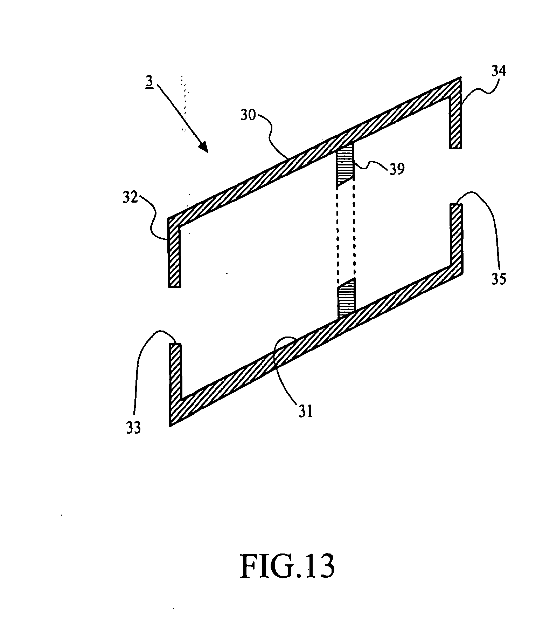

Instead of the projecting pipes 37, 38, an annular projection 39 may be provided on the inner circumferential wall surface 31 of the cylindrical member 30 (see Fig. 13). With this construction, the effect similar to that of the construction shown in Fig. 11 can be achieved, though this may lead to an increase in the pressure loss.

<Embodiment 4>

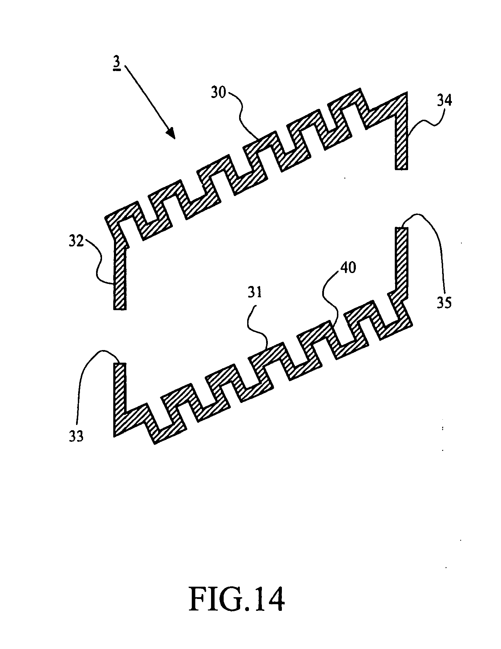

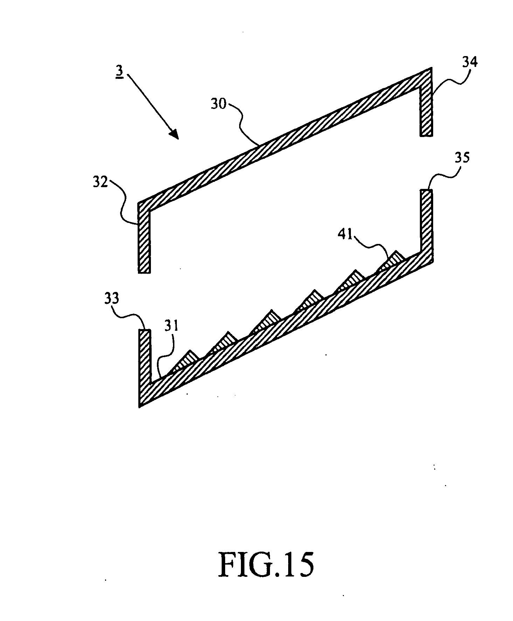

A fourth embodiment of the present invention will be described with reference to Figs. 14 and 15. Here, the features that are different from those in the first embodiment will be described, and a description of like features will be omitted.

Fig. 14 is a vertical cross sectional view showing the construction of the extension chamber 3 in this embodiment. In Fig. 14, a plurality of annular stepped portions 40 extending along the circumferential direction are provided on the inner circumferential wall surface 31 of the cylindrical member 30 that constitutes the extension chamber 3.

With the extension chamber 3 having the above-described construction, the length of the inner circumferential wall surface 31 from its upstream end to downstream end increases, and therefore evaporation of the reducing agent in the extension chamber 3 can be facilitated.

As the reducing agent in a liquid state flows from the upstream exhaust pipe 2 into the interior of the cylindrical member 30, the liquid reducing agent may flow on the inner circumferential wall surface 31. The liquid reducing agent evaporates as it flows on the circumferential wall surface 31 from its upstream end to downstream end, wherein the larger the length of the inner circumferential wall surface 31 from its upstream end to downstream end is, the larger the amount of the evaporation will be.

Therefore, the amount of evaporated reducing agent can be increased by providing the aforementioned stepped portions 40 to increase the length of the inner circumferential wall surface 31 from its upstream end to downstream end.

Furthermore, back step flows of the exhaust gas are created at the stepped portions 40, whereby the above-described evaporation of the liquid reducing agent is promoted. Even in cases where the flow speed of the exhaust gas is low as is the case when the internal combustion engine 1 is operating at low speed, the mixing of the exhaust gas and the reducing agent can be promoted by the back step flows created at the stepped portions 40.

In cases where the swirling flow is to be enhanced when the flow speed of the exhaust gas is low, ridge portions 41 as shown in Fig. 15 may be provided on the inner circumferential surface instead of the stepped portions 40. As the exhaust gas strikes the inclined surfaces of the ridge portions 41, a swirling flow tends to be created. Therefore, a relatively strong swirling flow can be created in the interior of the cylindrical member 30 even at a time when the flow speed of the exhaust gas is low.

<Embodiment 5>

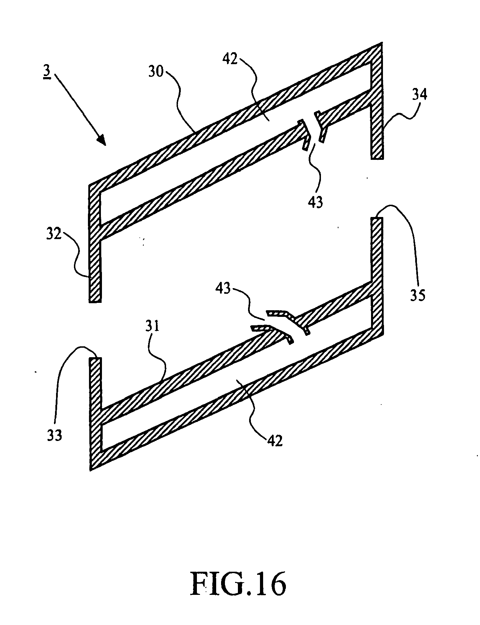

A fifth embodiment of the present invention will be described with reference to Figs. 16 to 18. Here, the features that are different from those in the first embodiment will be described, and a description of like features will be omitted.

Fig. 16 is a vertical cross sectional view showing the construction of the extension chamber 3 in this embodiment. In Fig. 16, a resonator is provided on the outer circumference of the cylindrical member 30 that defines the extension chamber 3. The interior of the cylindrical member 30 and the interior of the resonator 42 are in communication with each other via communication holes 43. It is preferred that the communication holes 43 be provided in such a way that only the exhaust gas can flow through them.

With the extension chamber 3 having the above-described construction, noises generated when the exhaust gas strikes the inner circumferential wall surface 31 of the cylindrical member 30 can be attenuated.

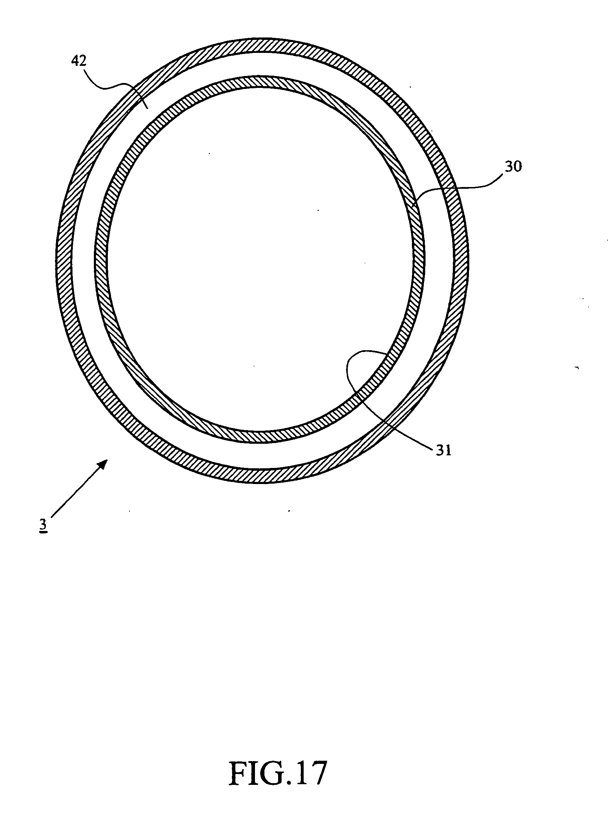

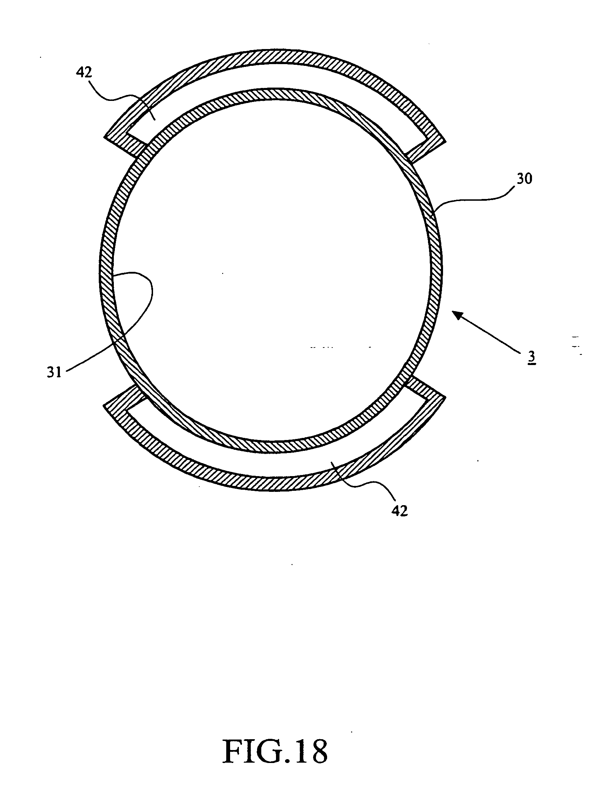

The resonator 42 may be provided all along the circumference of the cylindrical member 30 as shown in Fig. 17, or it may be provided on the regions in which the swirling flow strikes the inner circumferential wall surface 31 (e.g. in the bottom and/or top region) as shown in Fig. 18. With the construction shown in Fig. 18, it is possible to reduce noises while minimizing the increase in the size of the extension chamber 3.

<Embodiment 6>

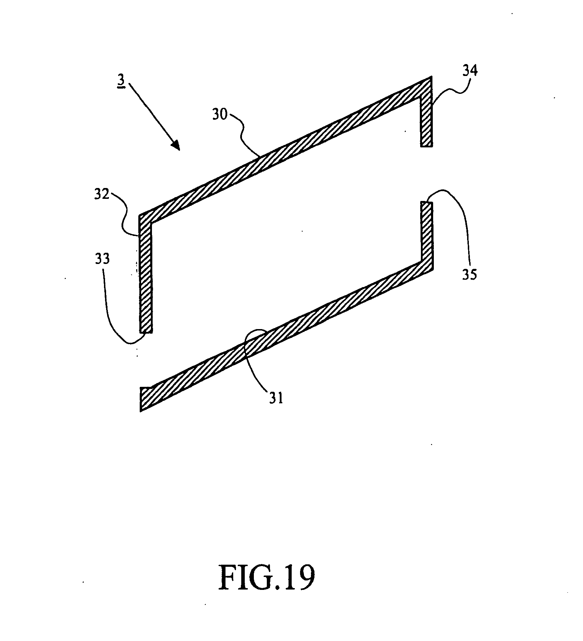

A sixth embodiment of the present invention will be described with reference to Figs. 19 to 20. Here, the features that are different from those in the first embodiment will be described, and a description of like features will be omitted.

Fig. 19 is a vertical cross sectional view showing the construction of the extension chamber 3 in this embodiment. In Fig. 19, the bottom surface of the inlet port 33 is configured to bring the interior of the upstream exhaust pipe 2 into connecting to the inner circumferential wall surface 31 of the cylindrical member 30 without any step therebetween.

If a step is present between the bottom surface inside the upstream exhaust pipe 2 and the bottom surface inside the cylindrical member 30, liquid reducing agent that has not evaporated and condensed water are expected to be stored on the aforementioned step. In contrast, if a step is not present between the bottom surface inside the upstream exhaust pipe 2 and the bottom surface inside the cylindrical member 30, liquid reducing agent and condensed water are prevented from being stored in the interior of the cylindrical member 30.

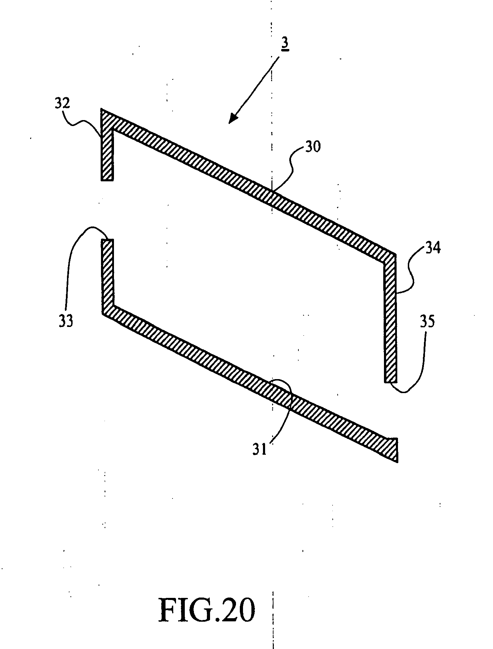

In this embodiment, a case in which the inlet port 33 is arranged at a position lower than the outlet port 35 (in other words, a case in which the upstream end wall 32 of the cylindrical member 30 is arranged to be lower than the downstream end wall 34) has been described by way of example. In the case where the inlet port 33 is arranged at a position higher than the outlet port 35 (see Fig. 20), the bottom surface of the outlet port 35 may be configured to bring the inner circumferential wall surface 31 of the cylindrical member 30 and the interior of the downstream exhaust pipe 4 into connecting to each other without any step therebetween.

<Embodiment 7>

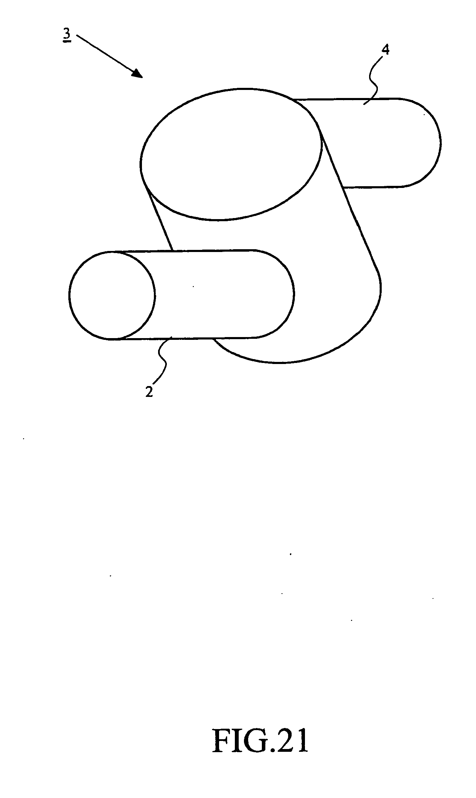

A seventh embodiment of the present invention will be described with reference to Figs. 21 to 23. Here, the features that are different from those in the first embodiment will be described, and a description of like features will be omitted.

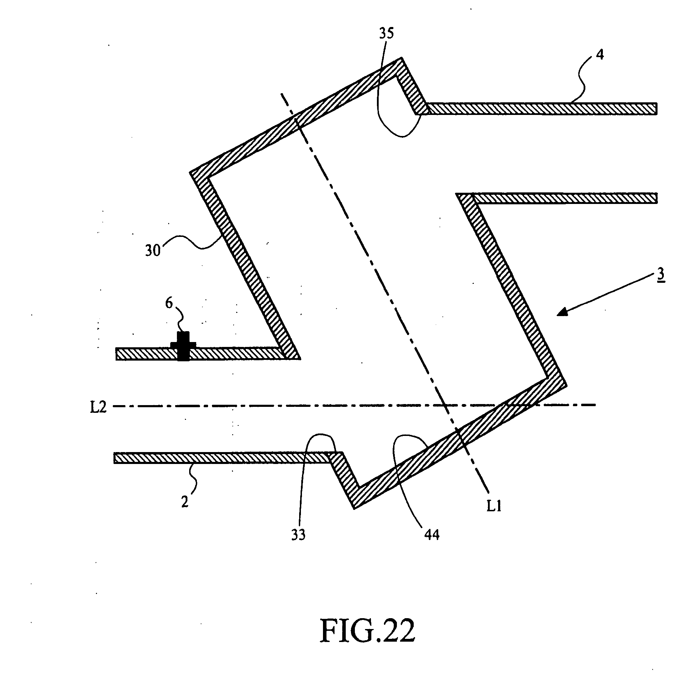

Fig. 21 is a perspective view showing the construction of the extension chamber 3 in this embodiment. In Fig. 21, the upstream exhaust pipe 2 and the downstream exhaust pipe 4 are joined to the circumferential wall of the cylindrical member 30. Specifically, the upstream exhaust pipe 2 and the cylindrical member 30 are joined in such a way that virtual line L1 drawn by extending the axis of the cylindrical member 30 and the direction of flow of the exhaust gas flowing into the cylindrical member 30 (that is, in this case, virtual line L2 drawn by extending the axis of the upstream exhaust pipe 2) cross obliquely each other as shown in Fig. 22. In other words, the aforementioned cylindrical member 30 is disposed in such a way that the virtual line L2 drawn by extending the axis of the upstream exhaust pipe 2 intersects with the bottom surface 44 of the cylindrical member 30 obliquely.

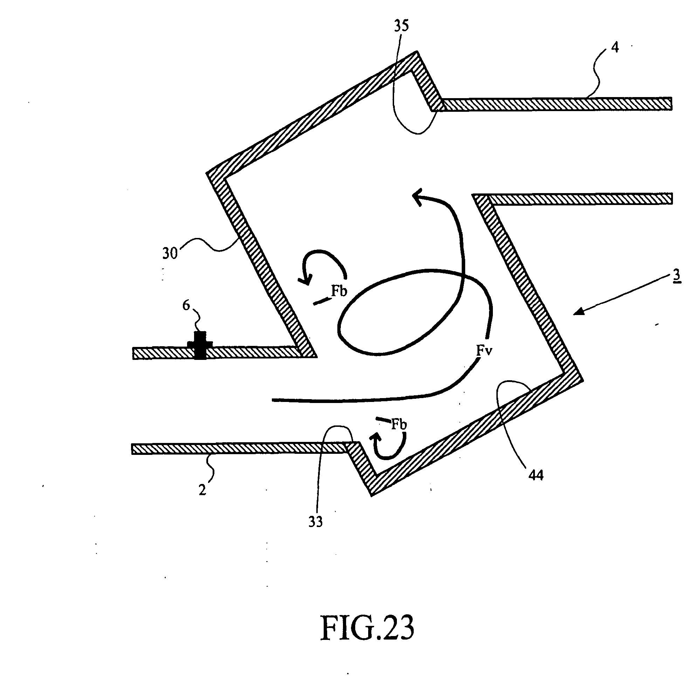

With the extension chamber 3 having the above-described construction, portions of the exhaust gas flowing from the upstream exhaust pipe 2 into the cylindrical member 30 through the inlet port 33 create back step flows Fb through the step of the inlet port 33 as shown in Fig. 23. The rest of the exhaust gas strikes the bottom surface 44 inside the cylindrical member 30 obliquely to go upward, and then strikes the inner circumferential wall surface of the cylindrical member 30 to swirl helically. Furthermore, when the swirling flow Fv and the back step flow Fb cross or meet each other, turbulence occurs in the interior of cylindrical member 30.

In consequence, the gas flowing out of the outlet port 35 of the extension chamber 3 into the downstream exhaust pipe 4 contains the exhaust gas and the reducing agent that are mixed uniformly, and a stream free from partial localization of the distribution of the flow rate is created. Therefore, the exhaust gas and the reducing agent will extend uniformly in the entire of the exhaust gas purification apparatus 5. Consequently, the purification capability of the of the exhaust gas purification apparatus 5 can be efficiently made use of.

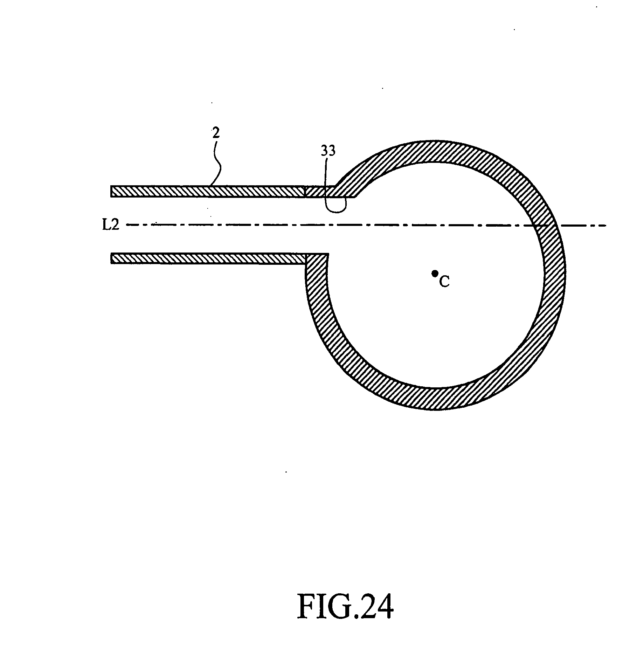

As shown in Fig. 24, the position of the inlet port 33 may be offset, with respect to the horizontal direction, in such a way that virtual line L2 drawn by extending the axis of the upstream exhaust pipe 2 does not passes through the center axis C of the cylindrical member 30. In this case, a force that causes the swirling flow to travel in the circumferential direction can be enhanced, whereby the mixing of the exhaust gas and the reducing agent can further be promoted. Furthermore, the turbulence that occurs when the swirling flow and the back step flow cross or meet each other can also be enhanced, whereby the elimination of the localization of the distribution of the flow rate is facilitated.

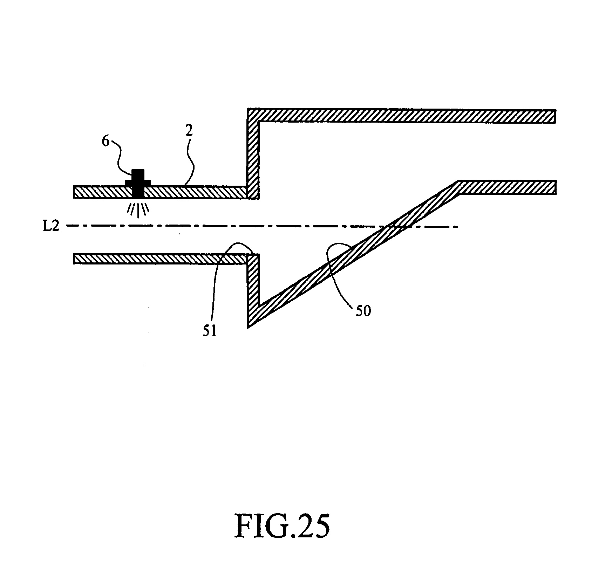

Although cases in which the extension chamber is defined by a hollow cylindrical member have been discussed in the above description of the first to seventh embodiments, the shape of the extension chamber is not limited to this as a matter of course. The extension chamber may have any shape, on condition that it has an inner wall surface 50 with which the virtual line L2 drawn by extending the axis of the upstream exhaust pipe 2 crosses obliquely, and that it has an inlet port 51 having a step by which the cross sectional area abruptly increases from the interior of the upstream exhaust pipe 2 to the interior of the extension chamber, for example as shown in Fig. 25. However, when the in-vehicle mountability of the extension chamber 3 and the time taken to manufacture it are taken into consideration, it will be preferred that the extension chamber be defined by a hollow cylindrical member.

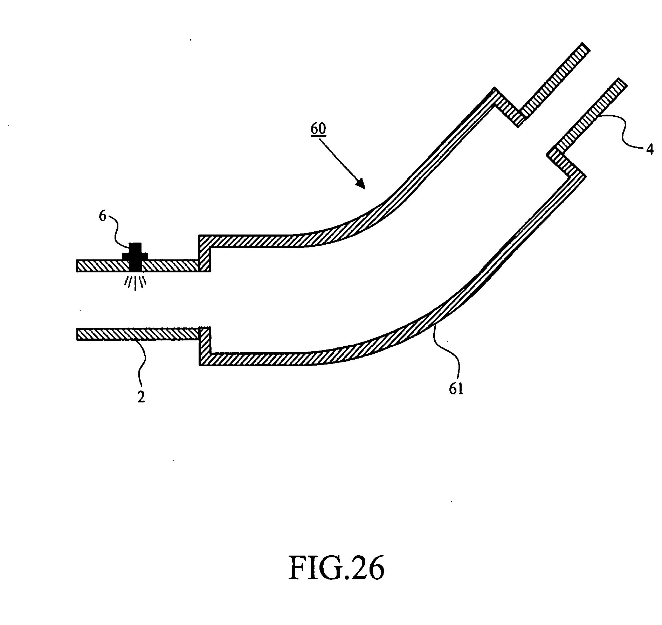

It is not necessary that the inner wall surface of the extension chamber be flat, but it may be curved in the direction of swirling of the swirling flow, or curved in a direction that is oblique to or perpendicular to the direction of swirling of the swirling flow. For example, as shown in Fig. 26, the extension chamber 60 may be formed by a hollow bent cylindrical member 61.

INDUSTRIAL APPLICABILITY

The present invention may be used in a vehicle equipped with an exhaust system in which a reducing agent is supplied to an exhaust gas purification apparatus.

**Claims**

1. An exhaust system of an internal combustion engine, comprising:

an exhaust gas purification apparatus (5) disposed in an exhaust pipe (2, 4) of the internal combustion engine (1);

an extension chamber (3, 60) provided in the middle of the exhaust pipe (2, 4) upstream of the exhaust gas purification apparatus (5), the extension chamber (3, 60) having an internal space with a cross sectional area larger than a cross sectional area of a passage in the exhaust pipe (2, 4);

a reducing agent supply apparatus (6) that supplies a reducing agent to exhaust gas flowing into said extension chamber (3, 60);

a back step flow creating portion that creates a back step flow (Fb) of exhaust gas in the interior space of said extension chamber (3, 60); and

a swirling flow creating portion that changes the flow of exhaust gas flowing into the interior space of said extension chamber (3, 60) into a swirling flow (Fs, Fv),

**characterized in that** said back step flow creating portion comprises an inlet port (33, 51) that brings the interior of the exhaust pipe (2) located upstream of said extension chamber (3, 60) and the interior space of said extension chamber (3, 60) into

communication with each other through a step, and said swirling flow creating portion comprises a guide wall surface, that is oriented obliquely to the inflowing direction of the exhaust gas flowing into said extension chamber (3, 60).

2. An exhaust system of an internal combustion engine according to claim 1, **characterized in that** said extension chamber (3, 60) is disposed in such a way that the axis of said extension chamber (3, 60) is oriented obliquely to the inflowing direction of the exhaust gas flowing into said extension chamber (3, 60), and said guide wall surface is an inner wall surface (31, 44, 50) of said extension chamber (3, 60).

3. An exhaust system of an internal combustion engine according to claim 1, **characterized in that** said guide wall surface is a surface of a projection (36) provided on an inner wall surface of said extension chamber (3, 60).

4. An exhaust system of an internal combustion engine according to any one of claims 1 to 3, **characterized in that** said step is provided only in the portion other than the portion which is an inner bottom surface of the inlet port (33, 51).

5. An exhaust system of an internal combustion engine according to any one of claims 1 to 4, **characterized in that** the distance from the upstream end of the interior space of said extension chamber (3, 60) to the downstream end thereof is equal to or smaller than seven times the height of said step.

6. An exhaust system of an internal combustion engine according to any one of claims 1 to 5, **characterized in that** said extension chamber (3, 60) is configured to have a hollow cylindrical shape.

## Patentansprüche

1. Abgassystem für einen Verbrennungsmotor, aufweisend:

eine Abgasreinigungsvorrichtung (5), die in einer Abgasleitung (2, 4) des Verbrennungsmotors (1) angeordnet ist;

eine Erweiterungskammer (3, 60), die in der Mitte der Abgasleitung (2, 4) stromauf der Abgasreinigungsvorrichtung (5) angeordnet ist, wobei die Erweiterungskammer (3, 60) einen Innenraum mit einer Querschnittsfläche aufweist, die größer als eine Querschnittsfläche eines Durchlasses in der Abgasleitung (2, 4) ist;

eine Reduktionsmittel-Zuführvorrichtung (6), die dem in die Erweiterungskammer (3, 60) strömenden Abgas ein Reduktionsmittel zuführt;

einen Rückwärtsströmungs-Erzeugungsbereich, der eine Rückwärtsströmung (Fb) des Abgases in dem Innenraum der Erweiterungskammer (3, 60) erzeugt; und

einen Drallströmungs-Erzeugungsbereich, der die Strömung des Abgases, das in den Innenraum der Erweiterungskammer (3, 60) strömt, in eine Drallströmung (Fs, Fv) umwandelt;

**dadurch gekennzeichnet, dass** der Rückwärtsströmungs-Erzeugungsbereich einen Einlasskanal (33, 51) aufweist, der das Innere der Abgasleitung (2), die sich stromauf der Erweiterungskammer (3, 60) befindet, mit dem Innenraum der Erweiterungskammer (3, 60) über eine Stufe miteinander in Verbindung bringt, und der Drallströmungs-Erzeugungsbereich eine Führungswandoberfläche aufweist, die schräg zu der Einströmrichtung des in die Erweiterungskammer (3, 60) strömenden Abgases ausgerichtet ist.

2. Abgassystem für einen Verbrennungsmotor nach Anspruch 1, **dadurch gekennzeichnet, dass** die Erweiterungskammer (3, 60) derart angeordnet ist, dass die Achse der Erweiterungskammer (3, 60) schräg zu der Einströmrichtung des in die Erweiterungskammer (3, 60) strömenden Abgases ausgerichtet ist, und die Führungswandoberfläche eine Innenwandoberfläche (31, 44, 50) der Erweiterungskammer (3, 60) ist.

3. Abgassystem für einen Verbrennungsmotor nach Anspruch 1, **dadurch gekennzeichnet, dass** die Führungswandoberfläche eine Oberfläche eines Vorsprungs (36) ist, der auf einer Innenwandoberfläche der Erweiterungskammer (3, 60) angeordnet ist.

4. Abgassystem für einen Verbrennungsmotor nach einem der Ansprüche 1 bis 3, **dadurch gekennzeichnet, dass** die Stufe nur in dem Bereich außer dem Bereich angeordnet ist, bei dem es sich um eine innere untere Oberfläche des Einlasskanals (33, 51) handelt.

5. Abgassystem für einen Verbrennungsmotor nach einem der Ansprüche 1 bis 4, **dadurch gekennzeichnet, dass** der Abstand von dem Ende stromauf des Innenraums der Erweiterungskammer (3, 60) zu dem stromabwärtigen Ende desselben kleiner oder gleich sieben Mal der Höhe der Stufe ist.

6. Abgassystem für einen Verbrennungsmotor nach einem der Ansprüche 1 bis 5, **dadurch gekennzeichnet, dass** die Erweiterungskammer (3, 60) so konfiguriert ist, dass sie eine hohlzylindrische Form aufweist.

**Revendications**

1. Système d'échappement d'un moteur à combustion interne, comprenant :

   un appareil de purification de gaz d'échappement (5) disposé dans un tuyau d'échappement (2, 4) du moteur à combustion interne (1) ;
   une chambre d'extension (3, 60) agencée au milieu du tuyau d'échappement (2, 4) en amont de l'appareil de purification de gaz d'échappement (5), la chambre d'extension (3, 60) ayant un espace interne avec une aire en coupe plus grande qu'une aire en coupe d'un passage dans le tuyau d'échappement (2, 4) ;
   un appareil d'amenée d'agent réducteur (6) qui fournit un agent réducteur au gaz d'échappement s'écoulant dans ladite chambre d'extension (3, 60) ;
   une portion créant un écoulement par étapes à rebours qui crée un écoulement par étapes à rebours (Fb) de gaz d'échappement dans l'espace intérieur de ladite chambre d'extension (3, 60) ; et
   une portion créant un écoulement en vortex qui change l'écoulement de gaz d'échappement s'écoulant dans l'espace intérieur de ladite chambre d'extension (3, 60) en un écoulement en vortex (Fs, Fv),
   **caractérisé en ce que** ladite portion créant un écoulement par étapes à rebours comprend une lumière d'admission (33, 51) qui amène l'intérieur du tuyau d'échappement (2) situé en amont de ladite chambre d'extension (3, 60) et l'espace intérieur de ladite chambre d'extension (3, 60) en communication l'un avec l'autre via un palier, et ladite portion créant un écoulement en vortex comprend une surface de paroi de guidage, qui est orientée de façon oblique par rapport à la direction d'entrée d'écoulement du gaz d'échappement s'écoulant dans ladite chambre d'extension (3, 60).

2. Système d'échappement d'un moteur à combustion interne selon la revendication 1, **caractérisé en ce que** ladite chambre d'extension (3, 60) est disposée de telle sorte que l'axe de ladite chambre d'extension (3, 60) est orienté de façon oblique par rapport à la direction d'entrée d'écoulement du gaz d'échappement s'écoulant dans ladite chambre d'extension (3, 60) et ladite surface de paroi de guidage est une surface de paroi interne (31, 44, 50) de ladite chambre d'extension (3, 60).

3. Système d'échappement d'un moteur à combustion interne selon la revendication 1, **caractérisé en ce que** ladite surface de paroi de guidage est une surface d'une protubérance (36) agencée sur une surface de paroi interne de ladite chambre d'extension (3, 60).

4. Système d'échappement d'un moteur à combustion interne selon l'une quelconque des revendications 1 à 3,
   **caractérisé en ce que** ledit palier n'est agencé que dans la portion autre que la portion qui est une surface inférieure interne de la lumière d'admission (33, 51).

5. Système d'échappement d'un moteur à combustion interne selon l'une quelconque des revendications 1 à 4, **caractérisé en ce que** la distance entre l'extrémité amont de l'espace intérieur de ladite chambre d'extension (3, 60) et l'extrémité aval de cette dernière est inférieure ou égale à sept fois la hauteur dudit palier.

6. Système d'échappement d'un moteur à combustion interne selon l'une quelconque des revendications 1 à 5, **caractérisé en ce que** ladite chambre d'extension (3, 60) est configurée pour avoir une forme cylindrique creuse.

FIG.1

FIG.2

FIG.3

FIG.4

FIG.5

EP 2 182 189 B1

FIG.6

FIG.7

EP 2 182 189 B1

FIG.8

FIG.9

FIG.10

FIG.11

EP 2 182 189 B1

FIG.12

FIG.13

EP 2 182 189 B1

FIG.14

FIG.15

EP 2 182 189 B1

FIG.16

FIG.17

42

30

31

3

FIG.18

FIG.19

EP 2 182 189 B1

**FIG.20**

FIG.21

FIG.22

FIG.23

FIG.24

EP 2 182 189 B1

FIG.25

FIG.26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006207442 A
- JP 2006322327 A
- JP 2005290993 A
- JP 2004510909 A
- JP 2006077576 A